# EUROPEAN PATENT APPLICATION

(11) **EP 4 668 381 A1**
(43) Date of publication of application: **24.12.2025**
(21) Application number: 24819607.3
(22) Date of filing: 07.06.2024
(51) Int. Cl.: H01M 10/04, H01M 10/0585, H01M 50/46, H01M 50/54

(54) **ELECTRODE ASSEMBLY AND MANUFACTURING METHOD THEREOF**

(30) Priority: 09.06.2023 KR 20230074359; 05.06.2024 KR 20240073995
(71) Applicant: LG Energy Solution, Ltd., Seoul 07335 (KR)
(72) Inventor: KIM, Jeong Yeon, Daejeon 34122 (KR); LEE, Jin Yong, Daejeon 34122 (KR); AN, Hye Ryeon, Daejeon 34122 (KR); HWANG, Sang Ho, Daejeon 34122 (KR); JEONG, Yeon Woo, Daejeon 34122 (KR); PARK, Bae Geon, Daejeon 34122 (KR)
(74) Representative: Goddar, Heinz J.
(86) International application number: PCT/KR2024/007796
(87) International publication number: WO 2024/253456

(57) **Abstract**

An electrode assembly according to an embodiment of the present disclosure may include a plurality of electrodes stacked on top of each other; a plurality of separators interposed between the plurality of electrodes; and a plurality of electrode tabs connected to the plurality of electrodes and protruding further outward than the plurality of separators. Each separator may include an edge portion that protrudes further than the electrode in the extension direction of the electrode tab and partially overlaps with the electrode tab in the stacking direction of the plurality of electrodes. The edge portions of at least some of the plurality of separators may be sealed to each other so that the plurality of electrode tabs are gathered together.

## Description

### TECHNICAL FIELD

### CROSS-REFERENCE TO RELATED APPLICATION

The present application claims priority to Korean Patent Application No. 10-2023-0074359 filed on June 9, 2023 and Korean Patent Application No. 10-2024-0073995 filed on June 5, 2024 in the Republic of Korea, the disclosures of which are incorporated herein by reference.

### TECHNICAL FIELD

The present disclosure relates to an electrode assembly and a manufacturing method thereof.

### BACKGROUND ART

In order to address the demand for new energy sources due to the depletion of petroleum resources and to suppress accelerating environmental pollution, research and development on power generation based on eco-friendly energy sources are in progress. In particular, research on secondary batteries that can be used repeatedly is being actively conducted, and various aspects such as materials, structures, processes, and stability of secondary batteries are being studied.

Among the manufacturing processes of a secondary battery, there may be a process of assembling the secondary battery, and the assembly process may include a process of gathering electrode tabs to facilitate welding (or tack welding) of the electrode tabs. In the process of gathering the electrode tabs, tab guides may be used on both sides of the electrode tabs, and welding or tack welding may be performed while the tab guides are gathering the electrode tabs.

According to the prior art, when the electrode tabs are gathered by the tab guides, the electrode tabs may not be gathered uniformly depending on the positions or spacing of the tab guides, or electrodes, separators, or electrode tabs may be damaged. Additionally, depending on the effects of vibration during welding (or tack welding), there may be a risk of disconnection or tearing of the electrode tabs.

### SUMMARY

### TECHNICAL PROBLEM

The present disclosure is designed to solve the problems of the related art, and therefore the present disclosure is directed to providing an electrode assembly capable of gathering a plurality of electrode tabs without a tab guide in the manufacturing process and a manufacturing method thereof.

### TECHNICAL SOLUTION

An electrode assembly according to an embodiment of the present disclosure may include a plurality of electrodes stacked on top of each other; a plurality of separators interposed between the plurality of electrodes; and a plurality of electrode tabs connected to the plurality of electrodes and protruding further outward than the plurality of separators. Each separator may include an edge portion that protrudes further than the electrode in an extension direction of the electrode tab and partially overlaps with the electrode tab in a stacking direction of the plurality of electrodes. The edge portions of at least some of the plurality of separators may be sealed to each other so that the plurality of electrode tabs are gathered together.

The edge portions of the plurality of separators may be bent toward a center with respect to a stacking direction of the electrode assembly.

The edge portion may include a center area overlapping with the electrode tab in a stacking direction of the plurality of electrodes; and side areas located at both sides of the center area. The side areas of at least some of the plurality of separators may be sealed to each other.

The center area of at least some of the plurality of separators may be bonded to the electrode tab.

The plurality of separators may include an inner separator located between the plurality of electrodes; a first outermost separator disposed on one outermost side of the plurality of electrodes; and a second outermost separator disposed on the other outermost side of the plurality of electrodes. The edge portion of the first outermost separator and the edge portion of the second outermost separator may be sealed to each other, or may be sealed to the edge portion of the inner separator.

The edge portion of the first outermost separator and the edge portion of the second outermost separator may protrude further than the edge portion of the inner separator in an extension direction of the electrode tab.

At least one of the first outermost separator and the second outermost separator may be provided in plurality.

The plurality of electrode tabs may be welded to each other at further outward side than the edge portion of the plurality of separators.

A manufacturing method of an electrode assembly according to an embodiment of the present disclosure may include preparing an electrode stack in which a plurality of electrodes and a plurality of separators are alternately stacked, wherein each separator includes an edge portion that protrudes further than the electrode in an extension direction of an electrode tab connected to the electrode and partially overlaps with the electrode tab in a stacking direction of the electrode stack; and sealing the edge portions of at least some of the plurality of separators to each other by a sealing tool so that the plurality of electrode tabs are gathered together.

In the sealing, the sealing tool may pressurize the edge portions of each of a first outermost separator and a second outermost separator located at both outermost sides of the plurality of separators in a direction of approaching each other.

In the sealing, the plurality of electrode tabs may be gathered by the sealing tool.

The edge portion may include a center area overlapping with the electrode tab in a stacking direction of the plurality of electrodes; and side areas located at both sides of the center area. In the sealing, the sealing tool may pressurize the side areas of at least some of the plurality of separators.

In the sealing, the sealing tool may pressurize the center area of at least some of the plurality of separators together with the side areas.

The manufacturing method of an electrode assembly may further include welding the plurality of electrode tabs gathered together by the edge portions sealed to each other.

### ADVANTAGEOUS EFFECTS

According to a preferred embodiment of the present disclosure, electrode tabs may be uniformly gathered without a tab guide. As a result, damage to electrodes, separators, and electrode tabs that could be caused by a conventional tab guide may be prevented.

Additionally, disconnection defects in electrode tabs may be prevented.

In addition to this, effects that may be easily predicted by those skilled in the art from configurations according to the preferred embodiment of the present disclosure may be included.

### BRIEF DESCRIPTION OF THE DRAWINGS

FIG. 1 is a perspective view showing a secondary battery.
FIG. 2 is a side view showing a state before the edge portions of a plurality of separators of an electrode assembly according to an embodiment of the present disclosure are sealed to each other.
FIG. 3 is a side view showing that the edge portions of the plurality of separators shown in FIG. 2 are sealed to each other.
FIG. 4 is a cutaway perspective view showing a portion of an electrode assembly according to an embodiment of the present disclosure.
FIG. 5 is a plan view of an electrode assembly according to an embodiment of the present disclosure.
FIG. 6 is a plan view showing a modified example of the electrode assembly shown in FIG. 5.
FIG. 7 is a side view showing that a plurality of electrode tabs shown in FIG. 2 are welded to each other.
FIG. 8 is a side view showing a state before the edge portions of a plurality of separators of an electrode assembly according to another embodiment of the present disclosure are sealed to each other.
FIG. 9 is a side view showing that the edge portions of the plurality of separators shown in FIG. 8 are sealed to each other.
FIG. 10 is a flowchart of a method for manufacturing an electrode assembly according to still another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

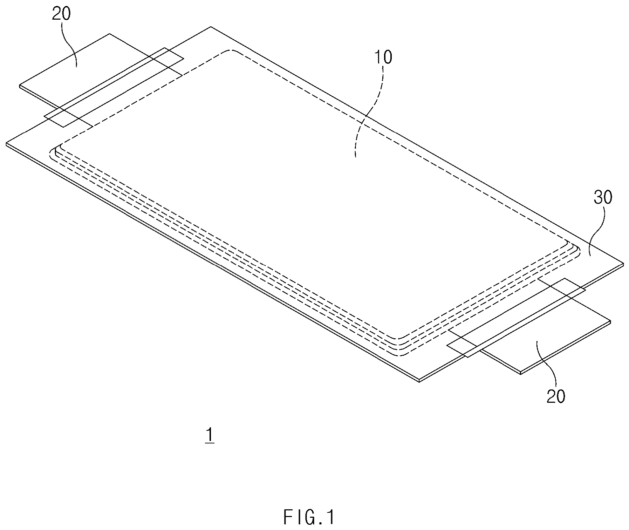

FIG. 1 is a perspective view showing a secondary battery.

The secondary battery 1 may include an electrode assembly 10, an exterior material 30 accommodating the electrode assembly 10, and an electrode terminal 20 connected to the electrode assembly 10 and exposed to the outside of the exterior material 30. The electrode terminal 20 may electrically connect an external load and the electrode assembly 10.

For example, the secondary battery 1 may be a pouch-type secondary battery, as shown in FIG. 1. In this case, the exterior material 10 may be a pouch manufactured by molding a laminated sheet. However, it is not limited thereto, and the secondary battery 1 may also be configured in various types, such as a prismatic or a cylindrical battery.

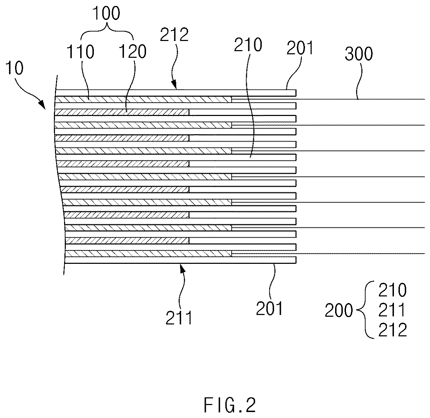

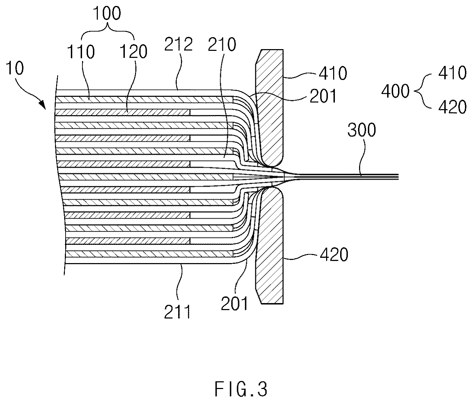

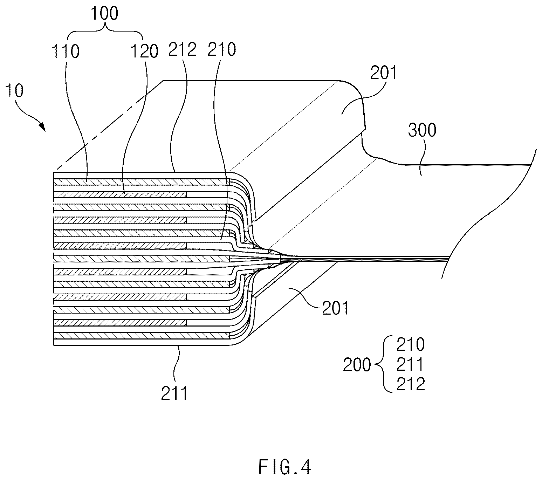

FIG. 2 is a side view showing a state before the edge portions of a plurality of separators of an electrode assembly according to an embodiment of the present disclosure are sealed to each other, FIG. 3 is a side view showing that the edge portions of the plurality of separators shown in FIG. 2 are sealed to each other, and FIG. 4 is a cutaway perspective view showing a portion of an electrode assembly according to an embodiment of the present disclosure.

The electrode assembly 10 according to an embodiment of the present disclosure may include a plurality of electrodes 100 stacked on top of each other. The plurality of electrodes 100 may include a negative electrode 110 and a positive electrode 120. The negative electrode 110 and the positive electrode 120 may be alternately stacked with the separator 200 interposed therebetween.

The electrode assembly 10 may include a plurality of separators 200 disposed between the plurality of electrodes 100. The separators 200 may be alternately interposed with the electrodes 100.

The plurality of separators 200 may be members that are separated from each other before the edge portions 201 to be described later are sealed to each other.

However, it is not limited thereto, and a plurality of separators 200 may also be formed integrally. For example, a long separator sheet may be interposed between the plurality of electrodes 100 by Z-folding, and at this time, a portion of the separator sheet located between the plurality of electrodes 100 may be defined as the plurality of separators 200. Additionally, the separator sheet may be folded on the side where the electrode tab 300 to be described later does not protrude.

The separator 200 may include polypropylene and/or polyethylene. Additionally, the separator 200 may include materials such as polymer composite, polyvinyl alcohol, polyester, and polyamide. The description of the material of the separator 200 described above is an example and is not limited to the above. The material of the separator 200 may be sealed by heating and pressurizing using a sealing tool 400 to be described later.

Each separator 200 may be larger than the electrode 100. More specifically, the end of the separator 200 may protrude further outward than the end of the electrode 100.

The plurality of separators 200 may include an inner separator 210 located between the plurality of electrodes 100, a first outermost separator 211 disposed on one outermost side of the plurality of electrodes 100, and a second outermost separator 212 disposed on the other outermost side of the plurality of electrodes 100.

At least one, preferably a plurality of inner separators 220 may be provided. The plurality of inner separators 220 may be alternately interposed with the plurality of electrodes 100.

The electrode assembly 10 may include a plurality of electrode tabs 300 connected to the plurality of electrodes 100 and protruding further outward than the plurality of separators 200. The plurality of electrode tabs 300 are electrically connected to the electrode 100 and may extend in one or both directions of the electrode 100.

Each electrode tab 300 may protrude from the electrode 100. Each electrode tab 300 may protrude further outward than the end of the separator 200.

The plurality of electrode tabs 300 may include a positive electrode tab connected to the positive electrode 110 and a negative electrode tab connected to the negative electrode 120. For example, the positive electrode tab may protrude to one side of the electrode assembly 100, and the negative electrode tab may protrude to the other side of the electrode assembly 100. As another example, the positive electrode tab and the negative electrode tab may also protrude in parallel to each other on the same side of the electrode assembly 100.

A plurality of the positive electrode tabs may be gathered and welded to each other, and a plurality of negative electrode tabs may be gathered and welded to each other. In FIGS. 2 to 4, the electrode tabs 300 are negative electrode tabs, and those skilled in the art will similarly understand positive electrode tabs that are not shown.

Meanwhile, each separator 200 may include an edge portion 201 that protrudes further than the electrode 100 in the extension direction of the electrode tab 300. A portion of the edge portion 201 may partially overlap with the electrode tab 300 in the stacking direction (vertical direction based on FIG. 2) of the plurality of electrodes 100.

The edge portions 201 of at least some of the plurality of separators 200 may be sealed to each other. More specifically, the edge portion 201 of the first outermost separator 211 and the edge portion 201 of the second outermost separator 212 may be sealed to each other, or may be sealed to the edge portion 201 of the inner separator 210.

As a result, the plurality of electrode tabs 300 may be gathered together by the edge portions 201 of the plurality of separators 200 that are sealed to each other. The plurality of electrode tabs 300 may remain gathered even without a separate tab guide, and may be easily welded without damage to the electrode tabs 300 in the subsequent welding process.

In this embodiment, the edge portions 201 of the plurality of separators 200 may be sealed to each other so that the plurality of electrode tabs 300 are gathered together. More specifically, the edge portion 201 of the first outermost separator 211 and the edge portion 201 of the second outermost separator 212 may be sealed to the edge portion 201 of the inner separator 210.

The edge portions 201 of the plurality of separators 200 may be sealed by a sealing tool 400. The sealing tool 400 may seal the edge portions 201 to each other by heating and pressurizing.

The sealing tool 400 may include a first sealing tool 410 and a second sealing tool 420 facing each other in the stacking direction of the electrode assembly 10. The first sealing tool 410 and the second sealing tool 420 may move in a direction of approaching each other to pressurize the edge portions 201 of the plurality of separators 200 and seal them to each other.

The first outermost separator 211 and the second outermost separator 212 may be bent to approach each other in the stacking direction of the electrode assembly 10. For example, the second outermost separator 212 may be bent downward, and the first outermost separator 211 may be bent upward.

The edge portions 201 of the plurality of separators 200 that are sealed to each other may support the plurality of electrode tabs 300 to be gathered. More specifically, the edge portions 201 of the plurality of separators 200 that are sealed by heating and pressurizing by the sealing tool 400 may maintain a state where the plurality of electrode tabs 300 are gathered.

When the edge portions 201 of the plurality of separators 100 are heated and pressurized to be sealed, the edge portion 201 of the first outermost separator 211 and the edge portion 201 of the second outermost separator 212 may be bonded to the edge portion 201 of the inner separator 210. Additionally, the edge portions 201 of the plurality of inner separators 210 may be bonded to each other.

In this case, the edge portion 201 of the first outermost separator 211, the edge portion 201 of the second outermost separator 212, and the edge portions 201 of the plurality of inner separators 210 may remain bonded to each other in a bent state. Therefore, the edge portions 201 of the plurality of separators 200 may be bent and sealed to each other, and the plurality of electrode tabs 300 may be fixed in a state of being gathered.

In other words, the first outermost separator 211 and the second outermost separator 212 may be provided to pressurize the plurality of electrode tabs 300. Specifically, the first outermost separator 211 and the second outermost separator 212 may be pulled by the inner separator 210 to pressurize the plurality of electrode tabs 300. Accordingly, the plurality of electrode tabs 300 may be gathered along the stacking direction of the plurality of electrodes 100 by pressurizing of the first outermost separator 211 and the second outermost separator 212.

The edge portions 201 of the plurality of separators 200 may be bent toward the center with respect to the stacking direction of the electrode assembly 10. Therefore, the plurality of electrode tabs 300 may also be gathered at the center with respect to the stacking direction of the electrode assembly 10.

The first outermost separator 211 and the second outermost separator 212 may be sealed in a form that covers the plurality of electrode tabs 300. For example, the first outermost separator 211 and the second outermost separator 212 may cover a portion of the electrode 100 side of the plurality of electrode tabs 300.

At least one of the first outermost separator 211 and the second outermost separator 212 may be provided in plurality. More specifically, at least one of the first outermost separator 211 and the second outermost separator 212 may be provided in a form where a plurality of layers are stacked on top of each other. As a result, the rigidity of supporting the plurality of electrode tabs 300 may be stronger.

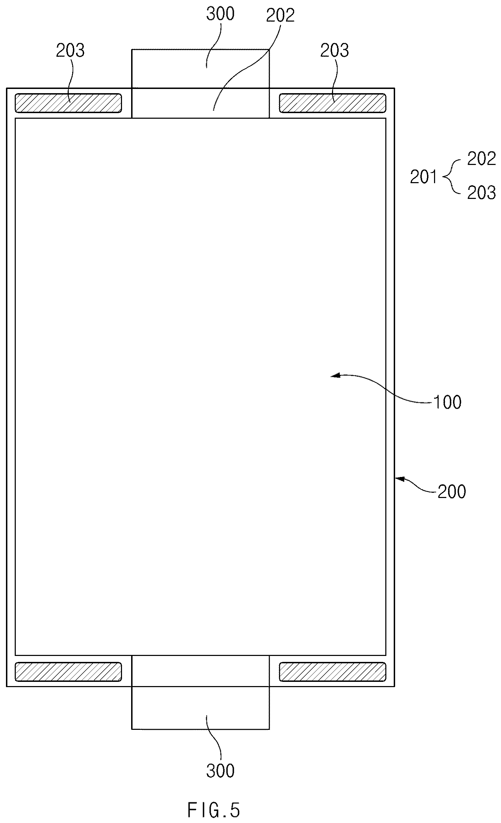

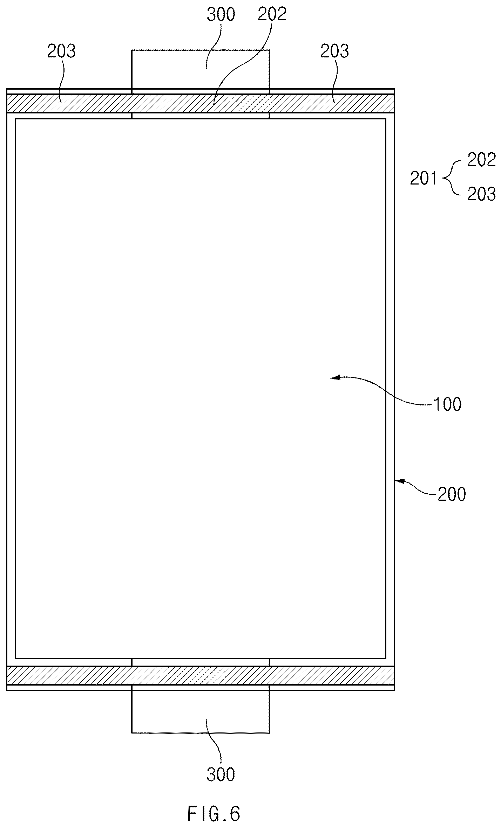

FIG. 5 is a plan view of an electrode assembly according to an embodiment of the present disclosure, and FIG. 6 is a plan view showing a modified example of the electrode assembly shown in FIG. 5.

The edge portion 201 of each separator 200 may include a center area 202 overlapping with the electrode tab 300 in the stacking direction of the plurality of electrodes 100, and side areas 203 located at both sides of the center area 202.

Referring to FIG. 5, the side areas 203 of at least some of the plurality of separators 200 may be sealed to each other. That is, the edge portions 201 of the plurality of separators 100 that are sealed together may be bonded to each other in the side area 203. In this case, the sealing tool 400 may heat and pressurize the side area 203 of the first outermost separator 211 and the side areas 203 of the second outermost separator 212.

Referring to FIG. 6, the center area 202 of at least some of the plurality of separators 200 may be in close contact with (or bonded to) the electrode tab 300. As a result, the plurality of electrode tabs 300 may be gathered more effectively. In this case, the sealing tool 400 may heat and pressurize the center area 202 and side areas 203 of the first outermost separator 211, and the center area 202 and side areas 203 of the second outermost separator 212 together.

In this way, since the edge portion 201 of the separator 200 covers the electrode tab 300, damage to the electrode tab 300 may be prevented. Additionally, the risk of short circuit between the plurality of electrodes 100 may be reduced by the edge portions 201 of the separator 200 that are sealed to each other.

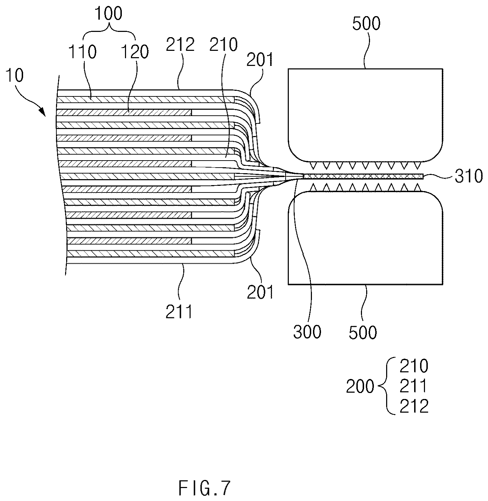

FIG. 7 is a side view showing that a plurality of electrode tabs shown in FIG. 2 are welded to each other.

After the edge portions 201 of the plurality of separators 200 are sealed to each other using the sealing tool 400, the plurality of electrode tabs 300 may be welded to each other. The plurality of electrode tabs 300 may be welded to each other at further outward side than the edge portion 201 of the plurality of separators 200.

Specifically, while the edge portions 201 of the plurality of separators 200 that are sealed to each other support the plurality of electrode tabs 300 in a gathered state, the plurality of electrode tabs 300 may be welded (or tack welded) using a welding device 500.

In this case, the plurality of electrode tabs 300 may remain gathered even without the sealing tool 400 or the tab guide.

Accordingly, welding (or tack welding) may be performed in a state where a plurality of electrode tabs 300 are uniformly gathered even without a tab guide, and damage to the electrode 100, the separator 200, and the electrode tab 300 due to the tab guide may be prevented.

In the prior art, the tab guide has gathered a plurality of electrode tabs 300 during welding (or tack welding) using the welding device 500. In this case, the tab guide may be affected by the progress of ultrasonic welding, and accordingly, the electrode tab 300 may be torn or damaged, which may cause disconnection defects.

On the other hand, according to the present disclosure, the plurality of electrode tabs 300 may remain gathered even if not supported by the tab guide, so that such defects may not occur.

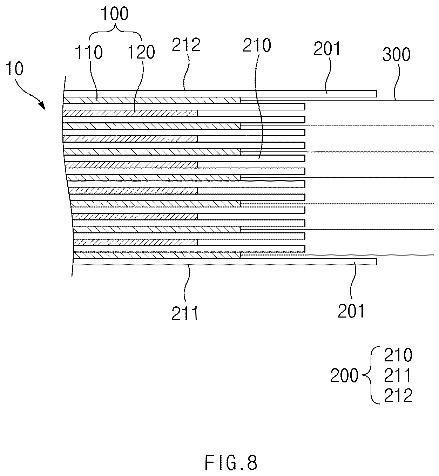

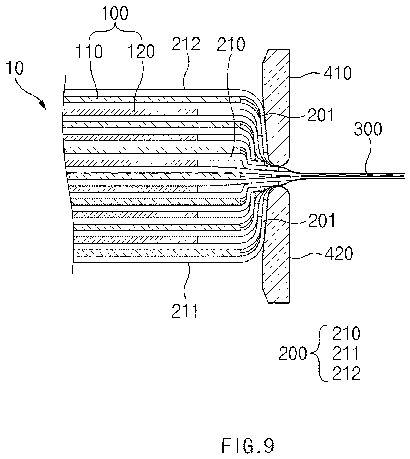

FIG. 8 is a side view showing a state before the edge portions of a plurality of separators of an electrode assembly according to another embodiment of the present disclosure are sealed to each other, and FIG. 9 is a side view showing that the edge portions of the plurality of separators shown in FIG. 8 are sealed to each other.

Hereinafter, content overlapping with the content described above will be omitted and the differences will be mainly described.

The edge portion 201 of the first outermost separator 211 and the edge portion 201 of the second outermost separator 212 may protrude further than the edge portion 201 of the inner separator 210 in the extension direction of the electrode tab 300.

In this case, during sealing using the sealing tool 400, the edge portion 201 of the first outermost separator 211 and the edge portion 201 of the second outermost separator 212 may pressurize the plurality of electrode tabs 300 more stably.

In other words, the area where the edge portions 201 of the first and second outermost separators 211, 212 cover the plurality of electrode tabs 300 may be expanded. Since the edge portions 201 of the first and second outermost separators 211, 212 pressurize the plurality of electrode tabs 300 over a large area, the plurality of electrode tabs 300 may be gathered more effectively.

As in the previous embodiment, the edge portions 201 of the first and second outermost separators 211, 212 may be bonded to the edge portion 201 of the inner separator 210 by heating and pressurizing by the sealing tool 400. In this case, the edge portions 201 of the first and second outermost separators 211, 212 may be pulled by the edge portion 201 of the inner separator 210.

However, if the edge portions 201 of the first and second outermost separators 211, 212 are long enough, the edge portion 201 of the first outermost separator 211 and the edge portion 201 of the second outermost separator 212 may be bonded to each other and sealed. More specifically, the side areas 203 of the first and second outermost separators 211, 212 may be bonded to each other and sealed. As a result, the plurality of electrode tabs 300 may be stably and effectively supported to be gathered together.

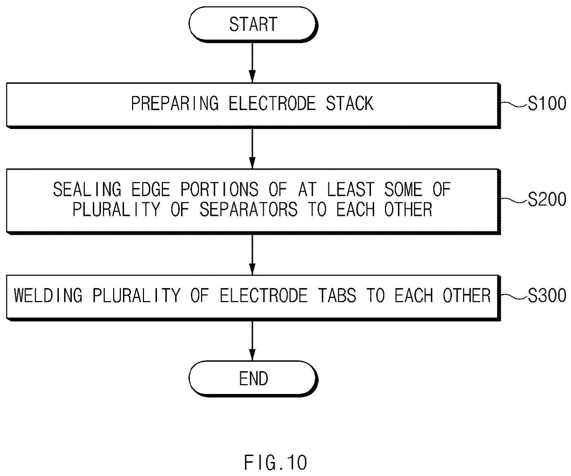

FIG. 10 is a flowchart of a method for manufacturing an electrode assembly according to still another embodiment of the present disclosure.

Hereinafter, a method for manufacturing the electrode assembly 10 according to the previously described embodiments will be described as still another embodiment of the present disclosure.

A method for manufacturing an electrode assembly (hereinafter, 'manufacturing method') according to still another embodiment of the present disclosure may include a step S100 of preparing an electrode stack 10, and a step S200 of sealing the edge portions 201 of at least some of the plurality of separators 200 to each other (hereinafter, a sealing step).

The electrode stack 10 may refer to the electrode assembly 10 in which the edge portions 201 of the plurality of separators 200 are not sealed to each other (see FIG. 2). The electrode stack and the electrode assembly are denoted by the same reference numeral '10' for convenience.

That is, the electrode stack 10 may include a plurality of electrodes 100 and a plurality of separators 200 that are alternately stacked with each other, and a plurality of electrode tabs 300 connected to the plurality of electrodes 100. Additionally, each separator 200 may include an edge portion 201 that protrudes further than the electrode 100 in the extension direction of the electrode tab 300, and a portion of the edge portion 201 may overlap with the electrode tab 300 in the stacking direction of the electrode stack 10.

In the sealing step S200, the sealing tool 400 may seal the edge portions 201 of at least some of the plurality of separators 200 so that the plurality of electrode tabs 300 are gathered together. The sealing tool 400 may seal the edge portions 201 of at least some of the plurality of separators 200 by heating and pressurizing.

More specifically, the sealing tool 400 may pressurize the edge portions 201 of each of the first outermost separator 211 and the second outermost separator 212 in a direction of approaching each other. At this time, the plurality of electrode tabs 300 may be gathered by the sealing tool 400.

For example, in the sealing step S200, the plurality of electrode tabs 300 may be gathered by the sealing tool 400 while sealing the edge portions 201 of the first and second outermost separators 211, 212 by heating and pressurizing through the sealing tool 400. In this case, the sealing tool 400 may pressurize the center area 202 of at least some of the plurality of separators 200 together with the side areas 203.

As another example, in the sealing step S200, the plurality of electrode tabs 300 may be gathered by the edge portions 201 of the first and second outermost separators 211, 212 while sealing the edge portions 201 of the first and second outermost separators 211, 212 by heating and pressurizing through the sealing tool 400. In this case, the sealing tool 400 may pressurize the side areas 203 of at least some of the plurality of separators 200.

The manufacturing method may further include a step S300 of welding the plurality of electrode tabs 300 to each other (hereinafter, 'welding step').

The welding step S300 may be performed after the sealing step S200. That is, the welding step S300 may be performed in a state where the plurality of electrode tabs 300 are gathered together by the edge portions 201 that are sealed to each other. More specifically, the welding device 500 may mutually weld the plurality of electrode tabs 300 gathered together by the edge portions 201 that are sealed to each other.

As a result, there is an advantage that the welding step S300 may be performed smoothly without using a tab guide.

Meanwhile, although not shown in FIG. 10, the manufacturing method may further include a step of cutting a portion of the plurality of electrode tabs 300 and/or a step of welding the plurality of electrode tabs 300 with electrode leads.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [LIST OF REFERENCE NUMERALS]

| | | | |
|---|---|---|---|
| 10: | Electrode assembly | 100: | Electrode |
| 110: | Negative electrode | 120: | Positive electrode |
| 200: | Separator | 201: | Edge portion (of separator) |
| 202: | Center area | 203: | Side area |
| 210: | Inner separator | 211: | First outermost separator |
| 212: | Second outermost separator | 300: | Electrode tab |
| 400: | Sealing tool | 410: | First sealing tool |
| 420: | Second sealing tool | 500: | Welding device |

## Claims

1. An electrode assembly comprising:
a plurality of electrodes stacked on top of each other;
a plurality of separators interposed between the plurality of electrodes; and
a plurality of electrode tabs connected to the plurality of electrodes and protruding further outward than the plurality of separators,
wherein each separator comprises an edge portion that protrudes further than the electrode in an extension direction of the electrode tab and partially overlaps with the electrode tab in a stacking direction of the plurality of electrodes, and
the edge portions of at least some of the plurality of separators are sealed to each other so that the plurality of electrode tabs are gathered together.

2. The electrode assembly according to claim 1,
wherein the edge portions of the plurality of separators are bent toward a center with respect to a stacking direction of the electrode assembly.

3. The electrode assembly according to claim 1,
wherein the edge portion comprises:
a center area overlapping with the electrode tab in a stacking direction of the plurality of electrodes; and
side areas located at both sides of the center area,
wherein the side areas of at least some of the plurality of separators are sealed to each other.

4. The electrode assembly according to claim 3,
wherein the center area of at least some of the plurality of separators is in close contact with the electrode tab.

5. The electrode assembly according to claim 1,
wherein the plurality of separators comprise:
an inner separator located between the plurality of electrodes;
a first outermost separator disposed on one outermost side of the plurality of electrodes; and
a second outermost separator disposed on the other outermost side of the plurality of electrodes,
wherein the edge portion of the first outermost separator and the edge portion of the second outermost separator are sealed to each other, or are sealed to the edge portion of the inner separator.

6. The electrode assembly according to claim 5,
wherein the edge portion of the first outermost separator and the edge portion of the second outermost separator protrude further than the edge portion of the inner separator in an extension direction of the electrode tab.

7. The electrode assembly according to claim 5,
wherein at least one of the first outermost separator and the second outermost separator is provided in plurality.

8. The electrode assembly according to claim 1,
wherein the plurality of electrode tabs are welded to each other at further outward side than the edge portion of the plurality of separators.

9. A manufacturing method of an electrode assembly comprising:
preparing an electrode stack in which a plurality of electrodes and a plurality of separators are alternately stacked, wherein each separator comprises an edge portion that protrudes further than the electrode in an extension direction of an electrode tab connected to the electrode and partially overlaps with the electrode tab in a stacking direction of the electrode stack; and
sealing the edge portions of at least some of the plurality of separators to each other by a sealing tool so that the plurality of electrode tabs are gathered together.

10. The manufacturing method of an electrode assembly according to claim 9,
wherein in the sealing, the sealing tool pressurizes the edge portions of each of a first outermost separator and a second outermost separator located at both outermost sides of the plurality of separators in a direction of approaching each other.

11. The manufacturing method of an electrode assembly according to claim 9,
wherein in the sealing, the plurality of electrode tabs are gathered by the sealing tool.

12. The manufacturing method of an electrode assembly according to claim 9,
wherein the edge portion comprises:
a center area overlapping with the electrode tab in a stacking direction of the plurality of electrodes; and
side areas located at both sides of the center area,
wherein in the sealing, the sealing tool pressurizes the side areas of at least some of the plurality of separators.

13. The manufacturing method of an electrode assembly according to claim 12,
wherein in the sealing, the sealing tool pressurizes the center area of at least some of the plurality of separators together with the side areas.

14. The manufacturing method of an electrode assembly according to claim 9, further comprising:
welding the plurality of electrode tabs gathered together by the edge portions sealed to each other.
